Europäisches Patentamt

European Patent Office

Office européen des brevets

(19)

(11) Veröffentlichungsnummer: **0 308 605 B1**

(12) **EUROPÄISCHE PATENTSCHRIFT**

(45) Veröffentlichungstag der Patentschrift: **30.09.92**

(51) Int. Cl.⁵: **B29C 49/56**

(21) Anmeldenummer: **88111454.0**

(22) Anmeldetag: **16.07.88**

(54) **Einrichtung zum Verriegeln der Formhälften einer Form für Streckblasmaschinen zum Blasformen von Hohlkörpern aus thermoplastischem Kunststoff.**

(30) Priorität: **25.09.87 DE 3732342**

(43) Veröffentlichungstag der Anmeldung:
**29.03.89 Patentblatt 89/13**

(45) Bekanntmachung des Hinweises auf die
Patenterteilung:
**30.09.92 Patentblatt 92/40**

(84) Benannte Vertragsstaaten:
**AT CH DE FR GB IT LI NL SE**

(56) Entgegenhaltungen:
**FR-A- 2 552 709**
**US-A- 3 825 396**
**US-A- 4 141 680**

(73) Patentinhaber: **HERMANN BERSTORFF Maschinenbau GmbH**
**An der Breiten Wiese 3/5**
**W-3000 Hannover 61(DE)**

(72) Erfinder: **Voss, Hermann**
**Greevenbrook 36**
**W-2105 Seevetal 2(DE)**
Erfinder: **Mank, Manfred, Dr. Dipl.-Ing.**
**Im Kohlhof 15**
**W-2000 Hamburg 65(DE)**

## Beschreibung

Die Erfindung betrifft eine Einrichtung der Gattung, wie beschrieben im Oberbegriff des Patentanspruchs 1.

Aus der DE-PS 33 36 071 ist eine Verriegelungseinrichtung an einer Streckblasmaschine bekannt, die nur an zwei Punkten eine Verriegelung der Formhälften gegeneinander erlaubt. Darüber hinaus erfordert die Verriegelungseinrichtung große Hebelgestänge, die mittels Steuerkurven und einem Steuerschieber betätigt werden.

Es ist die Aufgabe der Erfindung, eine Verriegelungseinrichtung für die Formhälften einer Streckblasmaschine zu schaffen, die sehr einfach in ihrer Herstellung ist, die wenig Raum benötigt und die eine Verriegelung über die gesamte Formteilfugenlänge ermöglicht. Trotz der Länge der Verriegelungsstrecke soll die Einrichtung einen sehr schnellen Ver- und Entriegelungsvorgang ermöglichen.

Die Aufgabe wird gelöst durch die in dem kennzeichnenden Teil des Patentanspruchs 1 beschriebenen Merkmale.

Durch die synchrone Verschiebung einer durchgehenden Welle, zusammen mit einzelenen, parallel dazu angeordneten und in Bohrungen geführten Verriegelungsstücken, jeweils um eine solche Weglänge, die ausreichend ist, um die einzelnen Verriegelungsstücke etwa zur Hälfte in die Wangen der einen Formhälfte und der anderen Formhälfte in Position zu bringen, wird ein sehr kurzer Verriegelungsweg erreicht. Trotz dieses kurzen Verriegelungsweges, um den die einzelnen Verriegelungsstücke verfahren werden, erfolgt eine Ver- und Entriegelung der Formhälften entlang der gesamten Länge der Formteilfuge in sehr kurzer Zeit.

Die einzelnen Verriegelungsstücke weisen eine Länge auf, die der Länge der Bohrung in den Wangen der Formteilhälften entspricht, so daß im Entriegelungszustand die Verriegelungsstücke in gesamter Länge und ohne überzustehen von den Bohrungen aufgenommen werden und die Formhälften dann voneinander weggeschwenkt werden können.

Durch die formschlüssige Verbindung der parallel zu den einzelnen Verriegelungsstücken angeordneten, durchgehenden Welle mit den einzelnen Verriegelungsstücken, jeweils am oberen und unteren Ende dieser Welle, ähnlich eines umlaufenden Rahmens, kann durch einen sehr kurzen Hub des Rahmens der Ent- oder Verriegelungsvorgang durchgeführt werden.

Die untere Verbindung der Welle mit dem unteren Verriegelungsstück erfolgt in vorteilhafter Weise mittels eines Querbolzens und die obere Verbindung mittels eines beide Wellenenden aufnehmenden Anschlages.

Wenn nun der somit formschlüssig gebildeten Rahmen mittels einer Hubeinrichtung um eine solche Weglänge angehoben oder abgesenkt wird, die der Weglänge entspricht, die die einzelnen Verriegelungsstücke in die Bohrungen der Wangen verschoben worden sind, erfolgt eine Verriegelung durch einen Hub von wenigen Zentimetern. Durch diesen kleinen Hubweg kann mühelos eine Formhöhe von mehreren Metern ver- und entriegelt werden.

Ein bevorzugtes Ausführungsbeispiel der Erfindung wird in den Zeichnungen gezeigt und nachfolgend erläutert.

Es zeigen:

Fig. 1    die Anlage zum kontinuierlichen Streckblasen von Flaschen.

Fig. 2    eine schematisierte Seitenansicht auf eine Blasstation.

Fig. 3    eine Draufsicht auf einen Querschnitt durch die geöffnete Form.

Fig. 4    eine Frontansicht auf die Formverriegelungseinrichtung.

Fig. 5    einen Querschnitt durch die Form und die Verriegelungseinrichtung im nicht verriegelten Zustand gemäß Linie V-V in Fig. 4.

Fig. 6    einen Querschnitt gemäß der Linie V-V in Fig. 4 mit der Verriegelungseinrichtung im verriegelten Zustand.

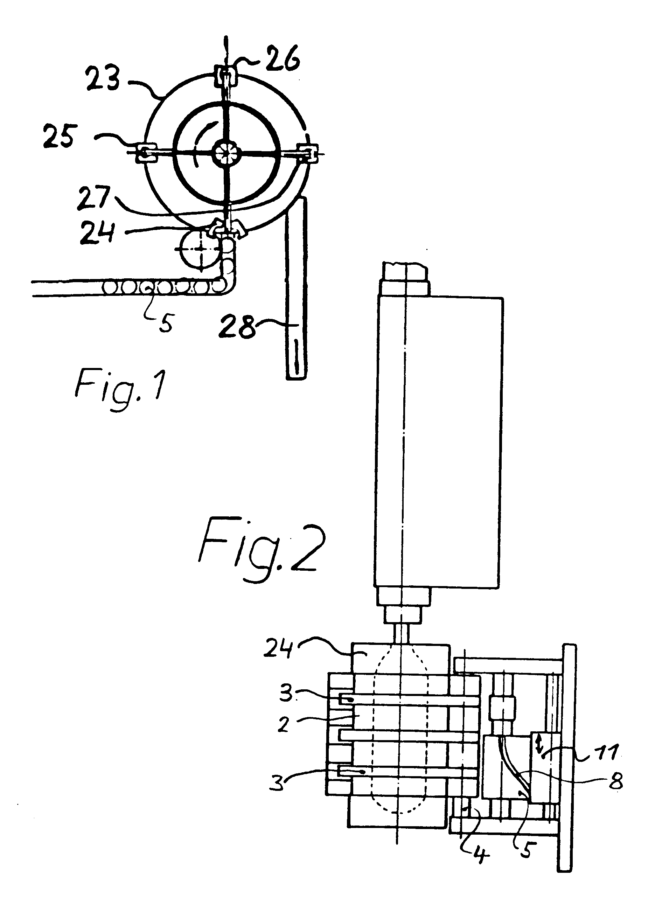

In einen in Fig. 1 gezeigten Steilförderer 20 werden die vorher auf einer Spritzgußmaschine hergestellten Vorformlinge eingegeben und einem Sortierer 21 zugeführt, der die Vorformlinge 5 übernimmt und der Heizstation 22 übergibt. Nach dem Aufheizvorgang gelangen die Vorformlinge zu dem Blasrad 23, welches vier Formen aufweist für eine schnelle Durchführung des Längsstreck- und anschließenden Aufblasvorganges des bereits aufgeheizten Vorformlings.

Die Form 24 wird aufgeklappt, der Vorformling aufgenommen und die Form wieder geschlossen. Anschließend dreht sich das Blasrad um 90°, so daß eine neue aufgeklappte Form zur Verfügung steht. In den Stationen 25 und 26 wird der Streck- und Blasvorgang durchgeführt. In der Station 27 wird die Form geöffnet und der fertige Behälter durch die Ausgabestrecke 28 einer nicht gezeigten Verpackungsmaschine zugeführt.

In Fig. 2 wird die Form 24 mit der schematisierten Öffnungs-und Verriegelungseinrichtung gezeigt.

Die Formhälften 1 und 2 sind an den Bügeln 3 befestigt, die wiederum auf der Welle 4 gelagert sind. Die Welle 4 bildet den Drehpunkt für den Verschwenkvorgang der Formhälften 1 und 2.

Durch ein Viergelenkgetriebe werden die Formhälften verschlossen und geöffnet.

Lenker 39 ist mit seinem einen Ende am Drehpunkt 32 mit dem Kurvenzylinder 5 und mit seinem anderen Ende am Drehpunkt 33 mit der Koppel 34 verbunden.

Die Koppel 34 verbindet die Drehpunkte 33 und 37.

Die Formhälften 1 und 2 werden mittels der Lenker 38 mit den Drehpunkten 37 verbunden.

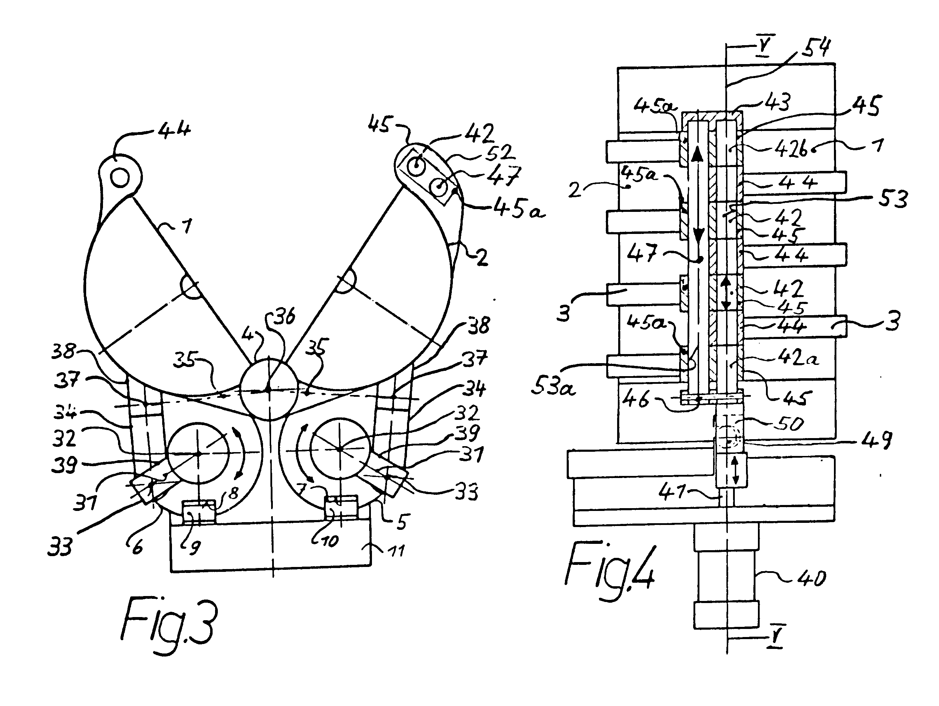

Wenn sich die Formhälften im geöffneten Zustand befinden, wie gezeigt in Fig. 3, sind die an dem Steuerschieber 11 befestigten Kurvenrollen 9 und 10 in ihrer unteren Position.

Um die Formhälften zu öffnen, wird der Steuerschieber 11 hydraulisch, pneumatisch oder mechanisch hoch gefahren, wodurch die Kurvenrollen 9 und 10 in der Kurvenbahn 7 und 8 bewegt werden und eine Drehbewegung (Pfeil) der Kurvenzylinder 5 und 6 erfolgt. Die Vertikalbewegung des Steuerschiebers 11 wird somit in eine Drehbewegung der Kurvenzylinder 5 und 6 umgewandelt.

Die Drehbewegung (Pfeil) um den Drehpunkt 32 der Kurvenzylinder 5 und 6 wird von einem, sich aus den Kurvenzylindern 5 und 6, den Kurvenrollen 9 und 10 und den Mantelkurven 7 und 8 zusammensetzenden Kurvengetriebe auf ein Viergelenkgetriebe übergeben.

Das Viergelenkgetriebe setzt sich zusammen aus der Antriebsschwinge 31 mit ihrem Drehpunkt 32, der mit dem Drehpunkt der Mantelkurvenzylinder 5 und 6 zusammenfällt und dem Drehpunkt 33 der Koppel 34.

Die Abtriebsschwinge 35 des Viergelenkgetriebes weist einen Gestelldrehpunkt 36 und einen gegenüberliegenden Koppeldrehpunkt 37 auf.

Die Abtriebsschwinge setzt sich zusammen aus einer Formhälfte 1, die um den Gestelldrehpunkt 36 drehbar und mit diesem befestigt ist und dem Lenker 38, der auf der einen Seite mit der Formhälfte 1 bzw 2 und auf der anderen Seite mit dem Koppeldrehpunkt 37 verbunden ist.

Die Öffnungs- und Schließbewegung der Formhälften 1 und 2 erfolgt somit mittels eines mit dem Kurvengetriebe verknüpften Viergelenkgetriebes, wobei durch die Anordnung des Gestelldrehpunktes 36 unmittelbar am Ende der Formteilfuge zwischen den Formhälften 1 und 2 ein äußerst kurzer Verschwenkweg verwirklicht wird.

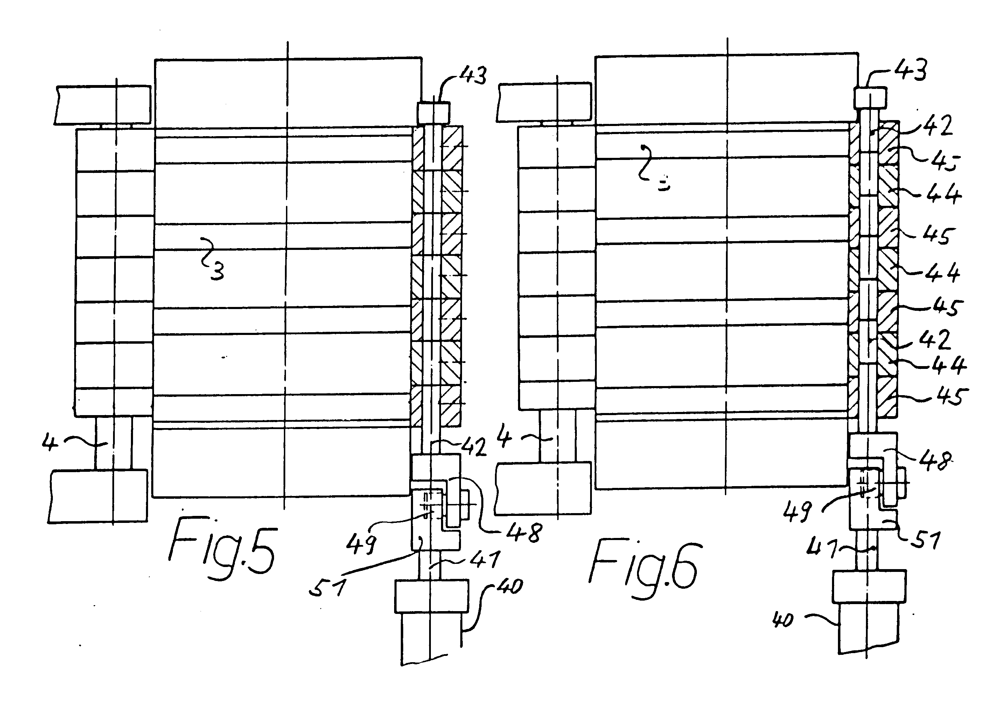

Die Verriegelung der Formhälften im geschlossenen Zustand erfolgt durch die in den Fig. 4 - 6 gezeigte Einrichtung.

Mittels eines Hydraulik- oder Pneumatikzylinders 40 oder mechanisch wird die Kolbenstange 41 hochgefahren und preßt dadurch die einzelnen Verriegelungsstücke 42 nach oben in die in Fig. 4 und 5 gezeigte entriegelte Position, d.h. die Formhälften 1 und 2 können in eine, in Fig. 3 gezeigte geöffnete Stellung verschwenkt werden. Gleichzeitig wird durch die Kolbenstange 41 die durchgehende Welle 47, die mittels eines Querbolzens 46 rahmenartig mit dem Verriegelungsstück 42a verbunden ist, mit angehoben.

Da alle Verriegelungsstücke 42 mit dem Anschlag 43 nach oben gefahren werden, befinden sich die Verriegelungsstücke 42 in ganzer Länge, ohne überzustehen, in den einzelnen Wangen 44 der Formhälfte 1 bzw in den einzelnen Wangen 45 der Formhälfte 2 (Fig. 4 und 5), so daß die Verriegelung der Formhälften gegeneinander gelöst ist und die Form aufgeschwenkt werden kann.

Nach dem Schließvorgang der Formhälften erfolgt die Verriegelung durch Herunterfahren der Kolbenstange 41 des Zylinders 40. Die Zugbewegung wird durch den Querbolzen 46 auf die Welle 47 übertragen, an die an ihrem oberen Ende der Anschlag 43 befestigt ist. Der Anschlag 43 führt die Verriegelungsstücke 42 herunter, so daß diese sich zwecks Verriegelung jeweils etwa zur Hälfte in den einzelnen Wangen 44 der Formhälfte 2 und den Wangen 45 der Formhälfte 1 befinden, wie gezeigt in Fig. 6.

Die Verriegelung der einen sehr hohen Innendruck aufnehmenden Formhälften 1 und 2 wird entlang der gesamten Längsteilungsfuge der Form durchgeführt, wobei besonders hervorzuheben ist, daß trotzdem nur ein äußerst kurzer Verriegelungsweg der zylinderförmigen Verriegelungsstücke 42 zurückzulegen ist.

Die Ver- und Entriegelung der Formhälften gegeneinander ist somit in einer sehr kurzen Zeit durchführbar, wobei die Verriegelungsstrecke trotzdem die gesamte Formhöhe umfaßt, d.h. die Formhälften werden entlang ihrer gesamten Teilungslängsfuge miteinander verriegelt. Es ist keine lange Verriegelungsstange, die einen Verriegelungshub entsprechend der Formhöhe benötigen würde, erforderlich.

Es reicht z.B. ein Kolbenhub der Kolbenstange 41 von etwa 3 cm aus, um eine Formhöhe in dem gezeigten Beispiel von etwa 90 cm von unten bis oben formschlüssig zu verriegeln. Bei einer Maschinenleistung von etwa 4.000 Flaschen pro Stunde kommt einer derartig schnellen Formverriegelung eine große Bedeutung zu.

Da die Formhälften 1, 2 sich nach einem Entriegelungsvorgang um den in Fig. 3 gezeigten Drehpunkt 36 aufschwenken lassen, ist zwischen dem unteren Verriegelungsstück 42 (welches mittels des Querbolzens 46 mit der Welle 47 verbunden ist) und der Kolbenstange 41 eine klauenartige Verbindung vorgesehen.

Beim Aufschwenkvorgang der Formhälften 1, 2 wird ein an dem Verriegelungsstück 42 angeordnetes Winkelstück 48 mit einer Klaue 50 von einem zylinderförmigen Stift 49 weggeschwenkt, der mittels eines Winkelstückes 51 mit der Kolbenstange 41 verbunden ist.

Die Verriegelungsstücke 42 und die durchgehende Welle 47 (Fig. 2, 3) sind an der Formhälfte 2 angeordnet und werden mit dieser verschwenkt. Beim Schließen der Form greift die Klaue 50 um den Stift 49, so daß zwecks Verriegelung der Formhälften gegeneinander mittels eines Hubes der Kolbenstange 41 dieser Vorgang durchgeführt werden kann.

**Patentansprüche**

1. Verriegelungseinrichtung zum Verriegeln der beiden Formhälften (1, 2) einer Blasform (24) einer Streckblasmaschine zum Herstellen eines Hohlkörpers aus thermoplastischem Kunststoff, wobei mehrere der Blasformen an einem Blasrad (23) angeordnet sind und wobei die Formhälften (1, 2) jeder der Blasformen zum Öffnen bzw. zum Schließen um einen Drehpunkt (36) gegeneinander verschwenkbar sind, mit an jeder der beiden Formhälften angeordneten, die Längsteilungsfuge (54) in radialer Richtung überragenden Verriegelungsklauen (44, 45), die im Schließzustand der Blasform (24) ineinandergreifen und mittels in Längsrichtung verschiebbarer Verriegelungsstücke (42, 42a, 42b) verriegelbar sind,
**dadurch gekennzeichnet,**
daß die Verriegelungsklauen (44, 45) über die gesamte Länge der Längsteilungsfuge (54) angeordnet sind,
daß jede der Verriegelungsklauen (44, 45) eines der Verriegelungsstücke (42, 42a, 42b) trägt, dessen Länge der Bohrungslänge der Verriegelungsklauen (44, 45) entspricht, und
daß für das Verschieben der Verriegelungsstücke (42, 42a, 42b) eine längsverschiebbare, parallel zu den Verriegelungsstücken (42, 42a, 42b) verlaufende Stange (47) angeordnet ist, die an ihrem unteren Ende mit dem unteren der Verriegelungsstücke (42a) und an ihrem oberen Ende mit mit oberen der Verriegelungsstücke (42b) verbunden ist.

2. Verriegelungseinrichtung nach Anspruch 1,
**dadurch gekennzeichnet,**
daß die Verbindung der Stange (47) am oberen Ende mittels eines Anschlages (43) und am unteren Ende mittels eines Querbolzens (46) gebildet ist.

3. Verriegelungseinrichtung nach einem der Ansprüche 1 oder 2,
**dadurch gekennzeichnet,**
daß das untere Verriegelungsstück (42a) mit einer Kolbenstange (41) eines Pneumatik- oder Hydraulikzylinders (40) verbunden ist.

4. Verriegelungseinrichtung nach Anspruch 3,
**dadurch gekennzeichnet,**
daß die Verbindung zwischen dem unteren Verriegelungsstück (42a) und der Kolbenstange (41) mittels eines an einem Winkelstück (51) befestigten Stiftes (49), um den eine an einem Winkelstück (48) befestigte Klaue (50) greift, lösbar ausgebildet ist.

**Claims**

1. Locking device for locking both halves (1, 2) of a blow mould (24) of a stretch-blow moulder for the production of a hollow body made of thermoplastics, with several blow moulds being arranged on a blowing wheel (23) and the halves (1, 2) of the blow moulds being swivel-mounted on a common pivot (36) for opening and/or closing, said mould halves being equipped with locking claws (44, 45) which radially project beyond the longitudinal parting line (54), engage when the blow mould (24) is closed, and can be locked by means of longitudinally displaceable locking elements (42, 42a, 42b),
**characterized in that**
the locking claws (44, 45) are arranged over the entire length of the longitudinal parting line (54), that each locking claw (44, 45) supports one of the locking elements (42, 42a, 42b), the length of which corresponds to the length of the bore of the locking claws (44, 45), and
that for displacing the locking elements (42, 42a, 42b) a longitudinally displaceable rod (47) is arranged in parallel to the locking elements (42, 42a, 42b) and connected with its bottom end to the lower locking element (42a) and with its top end to the upper locking element (42b).

2. Locking device as recited in claim 1, and
**characterized in that**
the connection of the rod (47) is designed as a stop (43) at the top end and as a transverse bolt (46) at the bottom end.

3. Locking device as recited in one of the claims 1 or 2, and
**characterized in that**
the lower locking element (42a) is connected to a piston rod (41) of a pneumatic or hydraulic cylinder (40).

4. Locking device as recited in claim 3, and
**characterized in that**
the connection between the lower locking element (42a) and the piston rod (41) consisting of a pin (49) fastened to an angular element (51) and enclosed by a claw (50) that is fixed to an angular element (48) is of engaging and disengaging design.

**Revendications**

1. Dispositif de verrouillage servant à verrouiller les deux moitiés de moule (1, 2) d'un moule de soufflage (24) d'une machine de soufflage par bi-orientation pour fabriquer un corps creux à partir d'un thermoplastique, plusieurs moules de soufflage étant arrangés sur une roue de soufflage (23) et les moitiés (1, 2) de chaque moule de soufflage étant pivotables l'une contre l'autre autour d'un pivot (36) pour l'ouverture et/ou la fermeture, les deux moitiés de moules pourvues de griffes de verrouillage (44, 45) dépassant radialement le plan de joint longitudinal (54) qui s'engrènent à l'état fermé du moule de soufflage et qui peuvent être verrouillées au moyen d'éléments de verrouillage (42, 42a, 42b) déplaçables longitudinalement, **caractérisé**
en ce que les griffes de verrouillage (44, 45) sont arrangées sur toute la longueur du plan de joint longitudinal (54),
en ce que chacune des griffes de verrouillage (44, 45) porte un des éléments de verrouillage (42, 42a, 42b), la longueur duquel correspond à la longueur de l'alésage des griffes de verrouillage et
en ce que, pour déplacer les éléments de verrouillage (42, 42a, 42b), une barre (47), déplaçable en direction longitudinale, est arrangée parallèlement aux éléments de verrouillage (42, 42a, 42b) et est connectée avec son extrémité inférieure à l'élément de verrouillage inférieur (42a) et avec son extrémité supérieure à l'élément de verrouillage supérieur (42b).

2. Dispositif de verrouillage selon revendication 1, **caractérisé**
en ce que la connexion de la barre (47) est réalisée à l'extrémité supérieure au moyen d'une butée (43) et à l'extrémité inférieure au moyen d'une goupille transversale (46).

3. Dispositif de verrouillage selon l'une des revendications 1 ou 2, **caractérisé**
en ce que l'élément de verrouillage inférieur (42a) est lié à une tige de piston (41) d'un vérin pneumatique ou hydraulique (40).

4. Dispositif de verrouillage selon revendication 3. **caractérisé**
en ce que la connexion entre l'élément de verrouillage inférieur (42a) et la tige de piston (41), constitué par un goujon fixé à une pièce coudée (51) qui est saisi par une griffe (50) fixée à une pièce coudée (48), est du type enclenchable/déclenchable.

Fig.1

Fig.2

Fig.3

Fig.4

EP 0 308 605 B1

Fig.5

Fig.6

EP 0 308 605 B1